# EUROPÄISCHE PATENTSCHRIFT

(11) **EP 2 568 262 B1**
(45) Veröffentlichungstag und Bekanntmachung des Hinweises auf die Patenterteilung: **08.08.2018**
(21) Anmeldenummer: 12005928.2
(22) Anmeldetag: 17.08.2012
(51) Int. Cl.: G01F 1/58, G01F 1/60, G05B 19/042

(54) **Verfahren zum Betrieb mehrerer benachtbarter magnetisch-induktiver Durchflussmessgeräte und Anordnung mehrerer benachtbarter magnetisch-induktiver Durchflussmessgeräte**
Method for operating multiple neighbouring magnetic-inductive flow meters and arrangement of multiple neighbouring magnetic-inductive flow meters
Procédé de fonctionnement de plusieurs débitmètres voisins à induction magnétique et arrangement de plusieurs débitmètres voisins à induction magnétique

(30) Priorität: 09.09.2011 DE 102011112763
(43) Veröffentlichungstag der Anmeldung: 13.03.2013
(73) Patentinhaber: KROHNE Messtechnik GmbH, 47058 Duisburg (DE)
(72) Erfinder: Brockhaus, Helmut, 46145 Oberhausen (DE); Florin Wilhelm, 47198 Duisburg (DE)
(74) Vertreter: Gesthuysen Patent- und Rechtsanwälte

(56) Entgegenhaltungen:
- EP-A1- 2 169 360
- WO-A2-03/049366
- DE-A1-102007 062 394

## Beschreibung

Die Erfindung betrifft ein Verfahren zum Betrieb mehrerer benachbarter magnetisch-induktiver Durchflussmessgeräte, wobei jedes der Durchflussmessgeräte ein von einem elektrisch leitenden Medium durchflossenes Messrohr, eine Magnetfelderzeugungseinrichtung zur Durchsetzung des Mediums mit einem eine Komponente senkrecht zur Längsachse des Messrohrs umfassenden Magnetfeld und eine Messeinrichtung zur Messung der in das Medium induzierten Spannung und zur Bestimmung des Durchflusses aus induzierten Spannung umfasst. Darüber hinaus betrifft die Erfindung auch eine Anordnung mehrerer benachbarter magnetisch-induktiver Durchflussmessgeräte, wobei jedes der benachbarten Durchflussmessgeräte eine Steuerungseinrichtung aufweist und die Steuerungseinrichtungen das vorgenannte Verfahren ausführen.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing, K. W. Bonfig, 3. Auflage, Vulkan-Verlag Essen, 2002, Seiten 123 bis 167, und außerdem auf die Literaturstelle "Grundlagen Magnetisch-Induktive Durchflussmessung" von Dipl.-Ing. Friedrich Hoffmann, 3. Auflage, Druckschrift der Firma KROHNE Messtechnik GmbH & Co. KG, 2003, verwiesen.

Das grundlegende Prinzip eines magnetisch-induktiven Durchflussmessgeräts zur Durchflussmessung eines strömenden Mediums geht auf Michael Faraday zurück, der bereits im Jahre 1832 vorgeschlagen hat, das Prinzip der elektromagnetischen Induktion zur Messung der Strömungsgeschwindigkeit eines elektrisch leitfähigen Mediums anzuwenden. Nach dem faradayschen Gesetz entsteht in einem solchen, von einem Magnetfeld durchsetzten strömenden Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die üblicherweise zwei Magnetfeldspulen aufweist, ein während eines Messvorgangs sich zeitlich veränderndes Magnetfeld erzeugt wird und das Magnetfeld wenigstens teilweise das durch ein Messrohr strömende elektrisch leitfähige Medium durchsetzt, wobei das erzeugte Magnetfeld eine Komponente senkrecht zur Strömungsrichtung des Mediums aufweist und der das Medium berührende Teil des Messrohrs elektrisch isolierend ist. Die durch Induktion im Medium erzeugte elektrische Feldstärke kann beispielsweise durch elektrisch mit dem Medium in Kontakt stehende Elektroden als elektrische Spannung gemessen werden oder von elektrisch nicht mit dem Medium in Kontakt stehende Elektroden kapazitiv detektiert werden. Aus den gemessenen Signalen wird dann der Durchfluss des Mediums durch das Messrohr abgeleitet. Der Messfehler aus dem Stand der Technik bekannter magnetisch-induktiver Durchflussmessgeräte ist kleiner als 0,2%.
Zu den magnetisch-induktiven Durchflussmessgeräten, von denen die Erfindung als Stand der Technik ausgeht, wird beispielhaft verwiesen auf die deutschen Offenlegungsschriften 197 08 857, 10 2004 063 617, 10 2008 057 755 und 10 2008 057 756. Eine weitere Vorrichtung gemäss dem Stand der Technik ist aus EP 2 169 360 A1 bekannt. In einer Vielzahl von Anwendungen ist es erforderlich, mehrere magnetisch-induktive Durchflussmessgeräte benachbart zueinander anzuordnen und zu betreiben, Ein erstes und ein zweites magnetisch-induktive Durchflussmessgeräte sind für die folgenden Betrachtungen dann benachbart, wenn wenigstens das von der Magnetfelderzeugungseinrichtung des ersten Durchflussmessgeräts erzeugte Magnetfeld das Messrohr des zweiten Durchflussmessgeräts zumindest teilweise durchsetzt. Selbstverständlich ist eine benachbarte Anordnung nicht auf zwei Durchflussmessgeräte begrenzt. Oftmals ist es nicht möglich, beispielsweise bei begrenztem räumlichen Verhältnissen, den räumlichen Abstand von magnetisch-induktiven Durchflussmessgeräten so groß zu wählen, dass sie nicht benachbart sind. Eine Abschirmung der Durchflussmessgeräte wäre mit zusätzlichen Kosten und Aufwand verbunden.
Führen das erste Durchflussmessgerät und das zweite Durchflussmessgerät im Betrieb Messvorgänge durch, so ist unbekannt zum einen, ob sich die Messvorgänge der beiden benachbarten Durchflussmessgeräte zeitlich überlappen, und zum anderen, wie groß im Fall einer zeitlichen Überlappung die im Allgemeinen nicht konstante zeitliche Überlappung ist.

Wird eine zeitliche Überlappung der Messvorgänge der beiden benachbarten Durchflussmessgeräte angenommen, so überlagern sich im Messrohr des zweiten Durchflussmessgeräts das von der Magnetfelderzeugungseinrichtung des zweiten Durchflussmessgeräts erzeugte Magnetfeld und das sich bis zum Messrohrs des zweiten Durchflussmessgeräts erstreckende, von der Magnetfelderzeugungseinrichtung des ersten Durchflussmessgeräts erzeugte Magnetfeld. Die Überlagerung der beiden Magnetfelder hat eine auf unbekannte Weise variierende induzierte elektrische Spannung und eine entsprechende Beeinflussung der Durchflussmessungen zur Folge, was eine Reduktion der Messqualität bedeutet. So kann beispielsweise bei konstantem Durchfluss durch das Messrohr eines Durchflussmessgeräts ein variierender Durchfluss von dem Durchflussmessgerät angezeigt werden. Selbstverständlich beeinflusst auch der Messvorgang des zweiten Durchflussmessgeräts den gemessenen Wert des Durchflusses des ersten Durchflussmessgeräts.

Aufgabe der vorliegenden Erfindung ist die Angabe eines Verfahrens zur Verbesserung der Messqualität bei benachbart angeordneten magnetisch-induktiven Durchflussmessgeräten und die Angabe einer entsprechend verbesserten Anordnung mehrerer benachbarter magnetisch-induktiver Durchflussmessgeräte.

Das erfindungsgemäße Verfahren zum Betrieb mehrerer benachbarter magnetisch-induktiver Durchflussmessgeräte, bei dem die zuvor hergeleitete und aufgezeigte Aufgabe gelöst ist, ist zunächst und im Wesentlichen dadurch gekennzeichnet, dass zur Vermeidung von Variationen der gegenseitigen Beeinflussungen der Durchflussmessungen durch die Magnetfelder benachbarter Durchflussmessgeräte die Messvorgänge einzelner benachbarter Durchflussmessgeräte synchronisiert werden. Ein synchronisierter Messvorgang benachbarter Durchflussmessgeräte wird als Synchron-Messvorgang bezeichnet. Durch das erfindungsgemäße Verfahren sind die gegenseitigen Beeinflussungen der Durchflussmessungen während der Durchführung von Synchron-Messvorgängen immer gleich.

Gemäß dem erfindungsgemässen Verfahren ist vorgesehen, dass während eines Messvorgangs bei mindestens einem der benachbarten Durchflussmessgeräte kein Magnetfeld durch die Magnetfelderzeugungseinrichtung des Durchflussmessgeräts erzeugt wird. Erzeugen nicht alle Magneterzeugungseinrichtungen benachbarter Durchflussmessgeräte wäh rend eines Messvorgangs ein Magnetfeld, so wird die gegenseitige Beeinflussung der Durchflussmessungen reduziert und die Messqualität verbessert. Erzeugt nur die Magnetfelderzeugungseinrichtung eines einzigen der benachbarten Durchflussmessgeräte während eines Messvorgangs ein Magnetfeld, so findet keine Beeinflussung der Durchflussmessung statt. Die Kehrseite ist, dass auch nur ein Durchfluss gemessen wird, Ein Messvorgang, bei dem nur durch die Magnetfelderzeugungseinrichtung eines einzigen der benachbarten Durchflussmessgeräte ein Magnetfeld erzeugt wird, wird als Einzel-Messvorgang bezeichnet.

Bei einer weiteren besonders vorteilhaften Ausgestaltung des erfindungsgemäßen Verfahrens ist vorgesehen, dass eine Reihe von Messungen durchgeführt wird und die Reihe von Messungen mindestens einen Synchron-Messvorgang und mindestens einen Einzel-Messvorgang für jedes der benachbarten Durchflussmessgeräte umfasst. Bei der Reihe von Messungen ist zu gewährleisten, dass der Durchfluss durch jedes der benachbarten Durchflussmessgeräte zwischen jeweils mindestens einem Einzel-Messvorgang und mindestens einem Synchron-Messvorgang hinreichend konstant ist. Die Differenz der Durchflussmesswerte aus einem Einzel-Messvorgang und einem Synchron-Messvorgang eines jeden der benachbarten Durchflussmessgeräte bei hinreichend konstantem Durchfluss durch das Messrohr dieses Durchflussmessgeräts ist ein Maß für die Beeinflussung dieses Durchflussmessgeräts durch die übrigen benachbarten Durchflussmessgeräte, aus dem die Kompensation für die Beeinflussung abgeleitet wird. Da sich Variationen des Durchflusses zwischen einem Einzel-Messvorgang und einem Synchron-Messvorgang unmittelbar auf die Differenz der Durchflussmesswerte auswirken und damit auch auf die Kompensation der Beeinflussung, ergibt sich die Anforderung an einen hinreichend konstanten Durchfluss unmittelbar aus der Anforderung an die Messqualität. Die Qualität von Durchflussmesswerten aus Synchron-Messvorgängen mit Kompensation wird nicht durch die benachbarte Anordnung von Durchflussmessgeräten reduziert. Eine mit Kosten und Aufwand verbundene Abschirmung der Durchflussmessgeräte oder eine Anordnung mit größerem räumlichen Abstand ist nicht erforderlich.

Bei einer weiteren bevorzugten Ausgestaltung des erfindungsgemäßen Verfahrens wird die hinreichende Konstanz des Durchflusses durch eines der benachbarten Durchflussmessgeräte durch mindestens einen Synchron-Messvorgang vor und mindestens einen Synchron-Messvorgang nach mindestens einem Einzel-Messvorgang oder durch mindestens einen Einzel-Messvorgang vor und mindestens einen Einzel-Messvorgang nach mindestens einem Synchron-Messvorgang überwacht. Die Messungen mit nicht hinreichender Konstanz des Durchflusses durch eines der benachbarten Durchflussmessgeräte werden verworfen und in der Reihe von Messungen nicht berücksichtigt.

Wie eingangs schon ausgeführt, betrifft die Erfindung auch eine Anordnung benachbarter magnetisch-induktiver Durchflussmessgeräte, wobei jedes der benachbarten Durchflussmessgeräte eine Steuerungseinrichtung umfasst und die Steuerungseinrichtungen der benachbarten Durchflussmessgeräte so eingerichtet sind, dass die benachbarten Durchflussmessgeräte das erfindungsgemäße Verfahren ausführen. Die zusätzliche Funktionalität beispielsweise für die Nicht-Erzeugung des Magnetfeldes während eines Messvorgangs oder die Ableitung der Kompensation wird mit dem Stand der Technik entsprechenden Durchflussmessgeräten realisiert.

Eine bevorzugte Ausführungsform der erfindungsgemäßen Anordnung ist dadurch gekennzeichnet, dass zur Steuerung der Messvorgänge die Steuerungseinrichtung eines jeden der benachbarten Durchflussmessgeräte mindestens eine Schnittstelle aufweist und die Schnittstellen der benachbarten Durchflussmessgeräte miteinander verbunden sind. Zur Verbindung der Schnittstellen der benachbarten Durchflussmessgeräte kann eine Steuerleitung vorgesehen sein, die nachfolgend mit Synchronisationsleitung bezeichnet wird. Über diese Synchronisationsleitung können ganz unterschiedliche Synchronisationssignale an die Schnittstellen der einzelnen Durchflussmessgeräte übertragen werden. So können als Synchronisationssignale Synchronisationsimpulse mit variabler Impulsbreite angewendet werden. Auslösend kann die Flanke der Synchronisationsimpulse sein, und zwar die steigende und/oder die fallende Flanke.

Die, wie zuvor erläutert, funktionsnotwendige Synchronisationsleitung kann auch zusätzlich zur weiteren Datenübertragung herangezogen werden, beispielsweise zur Übertragung von Daten zur Parametrierung der einzelnen Durchflussmessgeräte.

In einer bevorzugten Ausgestaltung der Erfindung ist die Steuerungseinrichtung eines jeden der benachbarten Durchflussmessgeräte mit einer RS485-Schnittstelle ausgestattet und die RS485-Schnittstellen sind miteinander verbunden. Die Messvorgänge der benachbarten Durchflussmessgeräte werden von einem der benachbarten Durchflussmessgeräte gesteuert. Die zusätzliche Funktionalität beispielsweise zur Synchronisation der Messvorgängen der benachbarten Durchflussmessgeräte oder zur Auswahl derjenigen Durchflussmessgeräte, deren Magnetfelderzeugungseinrichtungen während eines Messvorgangs kein Magnetfeld erzeugen sollen, wird mit dem dem Stand der Technik entsprechenden Durchflussmessgerät realisiert. Eine zusätzliche Steuerungseinrichtung ist daher nicht erforderlich.

Im Einzelnen gibt es nun verschiedene Möglichkeiten, das erfindungsgemäße Verfahren zum Betrieb mehrerer benachbarter magnetisch-induktiver Durchflussmessgeräte und die erfindungsgemäße Anordnung mehrerer benachbarter magnetisch-induktiver Durchflussmessgeräte auszugestalten und weiterzubilden. Dazu wird verwiesen auf die den Patentansprüchen 1 und 10 nachgeordneten Patentansprüche und die Beschreibung eines bevorzugten Ausführungsbeispiels in Verbindung mit der Zeichnung. In der Zeichnung zeigen
- Fig. 1: eine benachbarte Anordnung von vier mit erfmdungsgemäßen Steuerungseinrichtungen ausgestatteten magnetisch-induktiven Durchflussmessgeräten mit schematisch dargestellten gegenseitigen Beeinflussungen der Durchflussmessungen und
- Fig. 2: die Anordnung aus Fig.1 mit den in den Steuerungseinrichtungen enthaltenen verbundenen Schnittstellen.

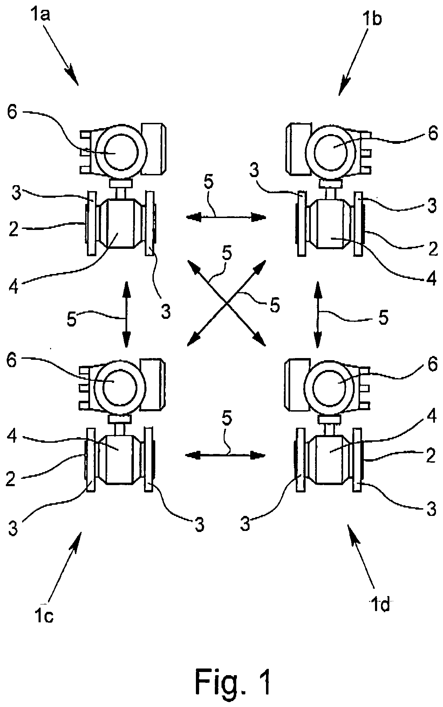

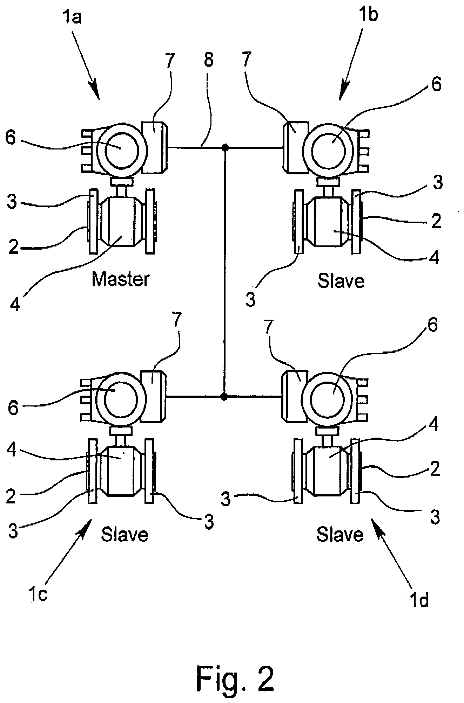

Die Fig. 1 und 2 zeigen eine benachbarte Anordnung von vier magnetisch-induktiven Durchflussmessgeräten 1, im Einzelnen mit 1a, 1b, 1c und 1d bezeichnet. Zu jedem Durchflussmessgerät 1 gehören ein von einem elektrisch leitenden Medium durchflossenes Messrohr 2 mit konstantem Außendurchmesser und einem Flansch 3 an jedem Ende des Messrohrs 3. Am Messrohr 3 angeordnet und unter einer Abdeckung 4 verborgen sind eine Magnetfelderzeugungseinrichtung und eine Messeinrichtung. Die Magnetfelderzeugungseinrichtung erzeugt ein das Medium im Messrohr 3 durchsetzende Magnetfeld und die von dem Magnetfeld in dem durch das Messrohr 3 fließenden Medium induzierte Spannung wird von der Messeinrichtung detektiert.

Die gegenseitigen Abhängigkeiten der Beeinflussungen 5 der Durchflussmessungen veranschaulicht Fig, 1, Das von der Magnetfelderzeugungseinrichtung eines Durchflussmessgeräts 1 erzeugte Magnetfeld durchsetzt nicht nur das Messrohr 2 dieses Durchflussmessgeräts 1, sondern durchsetzt auch die Messrohre 2 der übrigen benachbarten Durchflussmessgeräte 1. Ohne Synchronisation der Messvorgänge der benachbarten Durchflussmessgeräte 1 und Kompensation der gegenseitigen variationsfreien Beeinflussungen ist der von einem Durchflussmessgerät 1 gemessene Durchfluss durch die Magnetfelder der drei übrigen Durchflussmessgeräte 1 potentiell verfälscht.
Fig. 2 zeigt die Anordnung benachbarter Durchflussmessgeräte 1 mit zur Ausführung des erfindungsgemäßen Verfahrens eingerichteten Steuerungseinrichtungen 6 der Durchflussmessgeräte 1. Die Steuerungseinrichtungen 6 weisen Schnittstellen 7 auf, und die Schnittstellen 7 sind durch eine Steuerleitung, nachfolgend mit Synchronisationsleitung 8 bezeichnet, miteinander verbunden.

Die Messvorgänge der benachbarten Durchflussmessgeräte 1 werden vom Durchflussmessgerät 1a gesteuert, weshalb das Durchflussmessgerät 1a als Master-Durchflussgerät bezeichnet wird, während die übrigen Durchflussmessgeräte 1b, 1c und 1d als Slave-Durchflussmessgeräte bezeichnet werden.

Das Master-Durchflussmessgerät 1a startet durch ein Synchronisationssignal, das über die Schnittstellen 7 und die Synchronisationsleitung 8 an die Slave-Durchflussmessgeräte 1b, 1c und 1d übertragen wird, einen Synchron-Messvorgang von allen vier benachbarten Durchflussmessgeräten 1. Durch den synchronen Ablauf der Messvorgänge aller benachbarten Durchflussmessgeräte 1 sind die gegenseitigen Beeinflussungen der Durchflussmessungen variationsfrei.

Zuvor ist ausgeführt worden, dass das Master-Durchflussmessgerät 1a durch ein Synchronisationssignal, das über die Schnittstellen 7 und die Synchronisationsleitung 8 an die Slave-Durchflussmessgeräte 1b, 1c und 1d übertragen wird, einen Synchron-Messvorgang startet. Dabei kann es sich um ganz unterschiedliche Synchronisationssignale handeln. So können als Synchronisationssignale Synchronisationsimpulse mit variabler Impulsbreite angewendet werden. Dabei kann die Flanke der Synchronisationsimpulse, steigend oder fallend, auslösend sein. Das Master-Durchflussmessgerät 1a legt durch die Synchronisationssignale fest, welche Magneterzeugungseinrichtungen der benachbarten Durchflussmessgeräte 1 während eines Messvorgangs ein Magnetfeld erzeugen und welche Magnetfelderzeugungseinrichtungen kein Magnetfeld erzeugen.

Die, wie zuvor erläutert, funktionsnotwendige Synchronisationsleitung 8 kann auch zusätzlich zur Datenübertragung verwendet werden, beispielsweise zur Parametrierung der einzelnen Durchflussmessgeräte 1.
Zur Erlangung der für die Kompensation der variationsfreien gegenseitigen Beeinflussungen der Durchflussmessungen notwendigen Durchflussmessdaten wird eine Reihe von Messungen durchgeführt, währenddessen Medien durch die Messrohre 2 der benachbarten Durchflussmessgeräte 1 fließen. Zunächst wird ein Synchron-Messvorgang durchgeführt. Danach wird mit jedem der benachbarten Durchflussmessgeräte 1 ein Einzel-Messvorgang durchgeführt. Abschließend wird ein Synchron-Messvorgang durchgeführt. Sind die mit den Synchron-Messvorgängen vor und nach den Einzel-Messvorgängen gemessenen Durchflüsse durch jedes der Messrohre 2 hinreichend konstant, wird aus den Differenzen zwischen den in den Einzel-Messvorgängen und den in dem Synchron-Messvorgang nach den Einzel-Messvorgängen gemessenen Durchflüssen eines jeden Durchflussmessgeräts 1 eine Kompensation der Beeinflussung abgeleitet. Sind die Durchflüsse durch die Messrohre 2 nicht hinreichend konstant, werden die Messwerte verworfen und Messungen wiederholt,

## Patentansprüche

1. Verfahren zum Betrieb mehrerer benachbarter magnetisch-induktiver Durchflussmessgeräte, wobei jedes der benachbarten Durchflussmessgeräte ein von einem elektrisch leitenden Medium durchflossenes Messrohr, eine Magnetfelderzeugungseinrichtung zur Durchsetzung des Mediums mit einem eine Komponente senkrecht zur Längsachse des Messrohrs umfassenden Magnetfeld und eine Messeinrichtung zur Messung der in das Medium induzierten Spannung und zur Bestimmung des Durchflusses aus der induzierten Spannung umfasst und wobei zur Vermeidung von Variationen von gegenseitigen Beeinflussungen (5) der Durchflussmessungen durch die Magnetfelder benachbarter Durchflussmessgeräte (1) Messvorgänge einzelner benachbarter Durchflussmessgeräte (1) synchronisiert werden (Synchron-Messvorgang),
**dadurch gekennzeichnet,**
**dass** während eines Messvorgangs bei mindestens einem der benachbarten Durchflussmessgeräte (1) kein Magnetfeld durch die Magnetfelderzeugungseinrichtung des Durchflussmessgeräts erzeugt wird.

2. Verfahren nach Anspruch 1, **dadurch gekennzeichnet, dass** während eines Messvorgangs nur durch die Magnetfelderzeugungseinrichtung eines einzigen der benachbarten Durchflussmessgeräte (1) ein Magnetfeld erzeugt wird (Einzel-Messvorgang).

3. Verfahren nach Anspruch 2, **dadurch gekennzeichnet, dass** eine Reihe von Messungen durchgeführt wird und die Reihe von Messungen mindestens einen Synchron-Messvorgang und mindestens einen Einzel-Messvorgang für jedes der benachbarten Durchflussmessgeräte (1) umfasst und der Durchfluss durch das Messrohr (2) jedes der benachbarten Durchflussmessgeräte (1) zwischen jeweils mindestens einem Einzel-Messvorgang und mindestens einem Synchron-Messvorgang hinreichend konstant ist.

4. Verfahren nach Anspruch 3, **dadurch gekennzeichnet, dass** die hinreichende Konstanz des Durchflusses durch das Messrohr (2) eines der benachbarten Durchflussmessgeräte (1) durch mindestens einen Synchron-Messvorgang vor und mindestens einen Synchron-Messvorgang nach mindestens einem Einzel-Messvorgang überwacht wird.

5. Verfahren nach Anspruch 3, **dadurch gekennzeichnet**, das die hinreichende Konstanz des Durchflusses durch das Messrohr (2) eines der benachbarten Durchflussmessgeräte (1) durch mindestens einen Einzel-Messvorgang vor und mindestens einen Einzel-Messvorgang nach mindestens einem Synchron-Messvorgang überwacht wird.

6. Verfahren nach Anspruche 4 oder 5, **dadurch gekennzeichnet, dass** Messungen mit nicht hinreichender Konstanz des Durchflusses durch das Messrohr (2) eines der benachbarten Durchflussmessgeräte (1) verworfen werden.

7. Verfahren nach Anspruch 6, **dadurch gekennzeichnet, dass** unter Verwendung der Durchflussmesswerte aus den Einzel-Messvorgängen und den Synchron-Messvorgängen die von Variationen freien gegenseitigen Beeinflussungen der Durchflussmessungen durch die Magnetfelder der benachbarten Durchflussmessgeräte (1) kompensiert werden.

8. Verfahren nach einem der Ansprüche 1 bis 7, **dadurch gekennzeichnet, dass** die Messvorgänge von einem der benachbarten Durchflussmessgeräte (1) gesteuert werden.

9. Anordnung mehrerer benachbarter magnetisch-induktiver Durchflussmessgeräte, wobei jedes der benachbarten Durchflussmessgeräte ein von einem leitenden Medium durchflossenes Messrohr, eine Magnetfelderzeugungseinrichtung zur Durchsetzung des Mediums mit einem eine Komponente senk recht zur Längsachse des Messrohrs umfassenden Magnetfeld, eine Messeinrichtung zur Messung der in das Medium induzierten Spannung und zur Bestimmung des Durchflusses aus der induzierten Spannung und eine Steuerungseinrichtung umfasst,
**dadurch gekennzeichnet,**
**dass** die Steuerungseinrichtungen (6) benachbarter Durchflussmessgeräte (1) so eingerichtet sind, dass benachbarte Durchflussmessgeräte (1) das Verfahren nach einem der Ansprüche 1 bis 8 ausführen.

10. Anordnung mehrerer Durchflussmessgeräte nach Anspruch 9, **dadurch gekennzeichnet, dass** zur Steuerung der Messvorgänge die Steuerungseinrichtung (6) eines jeden der benachbarten Durchflussmessgeräte (1) mindestens eine Schnittstelle (7) aufweist und die Schnittstellen (7) der benachbarten Durchflussmessgeräte (1) miteinander verbunden sind.

11. Anordnung mehrerer Durchflussmessgeräte nach Anspruch 10, **dadurch gekennzeichnet, dass** zur Verbindung der Schnittstellen (7) der benachbarten Durchflussmessgeräte (1) eine Synchronisationsleitung (8) vorgesehen ist.

12. Anordnung mehrerer Durchflussmessgeräte nach Anspruch 11, **dadurch gekennzeichnet, dass** die Synchronisationsleitung (8) zur zusätzlichen weiteren Datenübertragung zwischen den benachbarten Durchflussmessgeräten (1) ausgeführt ist.

13. Anordnung mehrerer Durchflussmessgeräte nach einem der Ansprüche 10 bis 12, **dadurch gekennzeichnet, dass** die Schnittstellen (7) einem Standard wie dem HART-, dem RS485- oder dem Profibus-Standard genügen.

## Claims

1. Method for operation of several adjacent magnetic-inductive flow meters, wherein each of the adjacent flow meters comprises a measuring tube through which an electrically conductive medium flows, a magnetic field generating apparatus for permeating the medium with a magnetic field which comprises a component perpendicular to the longitudinal axis of the measuring tube, and a measurement apparatus for measuring the voltage which has been induced into the medium and for determining the flow rate from the induced voltage, and wherein, to prevent variations of the mutual influences(5) on the flow rate measurements by the magnetic fields of adjacent flow meters (1), measurement processes of individual, adjacent flow meters (1) are synchronized (synchronous measurement process),
**characterized in**
**that**, during a measurement process of at least one of the adjacent flow meters (1), no magnetic field is produced by the magnetic field generating apparatus of the flow meter.

2. Method according to claim 1, **characterized in that**, during a measurement process, a magnetic field is generated only by the magnetic field generation apparatus of a single one of the adjacent flow meters (1) (individual measurement process).

3. Method according to claim 2, **characterized in that** a series of measurements is taken and the series of measurements comprises at least one synchronous measurement process and at least one individual measurement process for each of the adjacent flow meters (1) and the flow rate through the measuring tube (2) of each of the adjacent flow meters (1) is relatively constant between at least one individual measurement process and at least one synchronous measurement process.

4. Method according to claim 3, **characterized in that** the relative constancy of the flow rate through the measuring tube (2) of one of the adjacent flow meters (1) is monitored by at least one synchronous measurement process before and at least one synchronous measurement process after at least one individual measurement process.

5. Method according to claim 3, **characterized in that** the relative constancy of the flow rate through the measuring tube (2) of one of the adjacent flow meters is monitored by at least one individual measurement process before and at least one individual measurement process after at least one synchronous measurement process.

6. Method according to claim 4 or 5, **characterized in that** measurements of the flow rate through the measuring tube (2) of any of the adjacent flow meters (1) that are not insufficiently constant are discarded.

7. Method according to claim 6, **characterized in that** using measured flow rate values from the individual measurement processes and the synchronous measurement processes, the mutual influences on the flow rate measurements, which influences are free of variations, are compensated by the magnetic fields of the adjacent flow meters (1).

8. Method according to any one of claims 1 to 7, **characterized in that** the measurement processes are controlled by one of the adjacent flow meters (1).

9. Arrangement of a plurality of adjacent electromagnetic flow meters, wherein each of the adjacent flow meters comprises a measuring tube through which a conductive medium flows, a magnetic field generating apparatus for permeating the medium with a magnetic field comprising a component perpendicular to the longitudinal axis of the measuring tube, a measuring apparatus for measuring the voltage induced in the medium and for determining the flow rate from the induced voltage and a control device,
**characterized in**
**that** the control devices (6) of adjacent flow meters (1) are set up so that adjacent flow meters (1) carry out the method according to any one of claims 1 to 8.

10. Arrangement of a plurality of flow meters according to claim 9, **characterized in that** for controlling the measuring operations, the control device (6) of each of the adjacent flow meters (1) has at least one interface (7) and the interfaces (7) of the adjacent flow meters (1) are connected to one another.

11. Arrangement of a plurality of flow meters according to claim 10, **characterized in that** a synchronization line (8) is provided for the connection of the interfaces (7) of the adjacent flow meters (1).

12. Arrangement of a plurality of flow meters according to claim 11, **characterized in that** the synchronization line (8) is designed for additional further data transmission between the adjacent flow meters (1).

13. Arrangement of a plurality of flow meters according to any one of claims 10 to 12, **characterized in that** the interfaces (7) satisfy a standard such as the HART, the RS485 or the Profibus standard.

## Revendications

1. Procédé pour faire fonctionner plusieurs débitmètres magnéto-inductifs voisins, chacun des débitmètres voisins comportant un tube de mesure traversé par un courant de fluide électriquement conducteur, un dispositif générateur de champ magnétique destiné à appliquer au fluide un champ magnétique comprenant une composante perpendiculaire à l'axe longitudinal du tube de mesure et un dispositif de mesure destiné à mesurer la tension induite dans le fluide et destiné à déterminer le débit à partir de la tension induite, les opérations de mesure des débitmètres (1) voisins individuels étant synchronisées (opération de mesure synchrone) en vue d'éviter des variations résultant des influences réciproques (5) des mesures du débit par les champs magnétiques des débitmètres (1) voisins,
**caractérisé en ce**
**que** pendant une opération de mesure, aucun champ magnétique n'est généré par le dispositif générateur de champ magnétique du débitmètre au niveau d'au moins l'un des débitmètres (1) voisins.

2. Procédé selon la revendication 1, **caractérisé en ce que** pendant une opération de mesure, un champ magnétique n'est généré que par le dispositif générateur de champ magnétique d'un seul des débitmètres (1) voisins (opération de mesure individuelle).

3. Procédé selon la revendication 2, **caractérisé en ce qu'**une série de mesures est effectuée et la série de mesures comporte au moins une opération de mesure synchrone et au moins une opération de mesure individuelle pour chacun des débitmètres (1) voisins, et le débit à travers le tube de mesure (2) de chacun des débitmètres (1) voisins est suffisamment constante respectivement entre au moins une opération de mesure individuelle et au moins une opération de mesure synchrone.

4. Procédé selon la revendication 3, **caractérisé en ce que** la constance suffisante du débit à travers le tube de mesure (2) de l'un des débitmètres (1) voisins est surveillée par au moins une opération de mesure synchrone avant et au moins une opération de mesure synchrone après au moins une opération de mesure individuelle.

5. Procédé selon la revendication 3, **caractérisé en ce que** la constance suffisante du débit à travers le tube de mesure (2) de l'un des débitmètres (1) voisins est surveillée par au moins une opération de mesure individuelle avant et au moins une opération de mesure individuelle après au moins une opération de mesure synchrone.

6. Procédé selon la revendication 4 ou 5, **caractérisé en ce que** les mesures ayant une constance insuffisante à travers le tube de mesure (2) de l'un des débitmètres (1) voisins sont rejetées.

7. Procédé selon la revendication 6, **caractérisé en ce que** les influences réciproques exemptes de variations des mesures du débit par les champs magnétiques des débitmètres (1) voisins sont compensées en utilisant les valeurs mesurées du débit issues des opérations de mesure individuelles et des opérations de mesure synchrones.

8. Procédé selon l'une des revendications 1 à 7, **caractérisé en ce que** les opérations de mesure sont commandées par l'un des débitmètres (1) voisins.

9. Arrangement de plusieurs débitmètres magnéto-inductifs voisins, chacun des débitmètres voisins comportant un tube de mesure traversé par un courant de fluide électriquement conducteur, un dispositif générateur de champ magnétique destiné à appliquer au fluide un champ magnétique comprenant une composante perpendiculaire à l'axe longitudinal du tube de mesure, un dispositif de mesure destiné à mesurer la tension induite dans le fluide et destiné à déterminer le débit à partir de la tension induite et un dispositif de commande,
**caractérisé en ce**
**que** les dispositifs de commande (6) des débitmètres (1) voisins sont conçus de telle sorte que les débitmètres (1) voisins mettent en oeuvre le procédé selon l'une des revendications 1 à 8.

10. Arrangement de plusieurs débitmètres selon la revendication 9, **caractérisé en ce que** pour la commande des opérations de mesure, le dispositif de commande (6) de chacun des débitmètres (1) voisins possède au moins une interface (7) et les interfaces (7) des débitmètres (1) voisins sont connectées entre elles.

11. Arrangement de plusieurs débitmètres selon la revendication 10, **caractérisé en ce qu'**une ligne de synchronisation (8) est présente pour la connexion des interfaces (7) des débitmètres (1) voisins.

12. Arrangement de plusieurs débitmètres selon la revendication 11, **caractérisé en ce que** la ligne de synchronisation (8) est réalisée en plus pour la transmission de données supplémentaire entre les débitmètres (1) voisins.

13. Arrangement de plusieurs débitmètres selon l'une des revendications 10 à 12, **caractérisé en ce que** les interfaces (7) répondent à une norme telle que la norme HART, RS485 ou Profibus.
